# EUROPEAN PATENT APPLICATION

(11) **EP 4 769 783 A1**
(43) Date of publication of application: **01.07.2026**
(21) Application number: 25855071.4
(22) Date of filing: 18.08.2025
(51) Int. Cl.: H01M 50/431, H01M 50/451, H01M 50/42, H01M 50/491, H01M 50/403

(54) **SEPARATOR FOR LITHIUM SECONDARY BATTERY, METHOD OF MANUFACTURING SAME, AND LITHIUM SECONDARY BATTERY CONTAINING SAME**

(30) Priority: 16.08.2024 KR 20240110042
(71) Applicant: LG Energy Solution, Ltd., Seoul 07335 (KR)
(72) Inventor: LEE, Yong-Hyeok, Daejeon 34122 (KR); KIM, Ji-Eun, Daejeon 34122 (KR); KIM, Ji-Yeon, Daejeon 34122 (KR); LEE, Yoo-Jin, Daejeon 34122 (KR)
(74) Representative: Hoffmann Eitle
(86) International application number: PCT/KR2025/012460
(87) International publication number: WO 2026/038922

(57) **Abstract**

The present disclosure provides a separator for a lithium secondary battery, including a porous polymer substrate; and an inorganic coating layer present on at least one surface of the porous polymer substrate, the inorganic coating layer including core-shell composite particle precursors, wherein the core-shell composite particle precursors include a core portion and a shell portion covering at least a part of a surface of the core portion, wherein the core portion includes inorganic particles, and wherein the shell portion includes an acrylic monomer or oligomer.

## Description

### TECHNICAL FIELD

The present disclosure relates to a separator for a lithium secondary battery, a method for manufacturing the same and a lithium secondary battery including the same.

This application is based on and claims priority from Korean Patent Application No. 10-2024-0110042 filed on August 16, 2024 in the Republic of Korea, the disclosure of which is incorporated herein by reference in its entirety.

### BACKGROUND ART

Non-aqueous secondary batteries including lithium secondary batteries are widely used as power sources for portable electronic devices such as laptop computers, mobile phones, digital cameras or camcorders as well as electric vehicles.

In separators of lithium secondary batteries, the basic requirements include electrical separation and insulation of positive electrodes from negative electrodes and high ionic conductivity attributed to high permeability (air permeability) of ions, for example, lithium ions, based on high porosity. The separators do not participate in electrochemical reactions of the secondary batteries, but have significant influence on performance and safety of the secondary batteries due to the physical properties such as electrolyte wetting, porosity or thermal shrinkage.

The separators using porous polymer substrates shrink at high temperatures, causing internal short circuits, and in the event of thermal runaway, when the polymer separator substrates melt, fire risks increase. Accordingly, to address the disadvantages of the porous polymer substrate, an inorganic coating layer may be added to one or two surfaces of the porous polymer substrate, and the inorganic coating layer may include inorganic particles and a binder polymer for overcoming the drawbacks of the porous polymer substrate.

In the inorganic coating layer, the binder polymer is located between the inorganic particles, causing clogged pores between the inorganic particles, resulting low air permeability and poor wetting of the separator, adversely affecting resistance characteristics. Therefore, there is a need for development of separators for reducing or preventing the above-described problem.

### DISCLOSURE

### Technical Problem

The present disclosure is designed to address the above-described problems, and therefore the present disclosure is directed to providing a separator for a lithium secondary battery with high adhesion strength (dry adhesion strength) with respect to electrodes and good air permeability, wetting and resistance characteristics, and a method for manufacturing the same.

The technical problems to be solved by the present disclosure are not limited thereto, and include another problem that will be clearly understood by those skilled in the art from the detailed description.

### Technical Solution

To achieve the above-described objectives, according to an aspect of the present disclosure, provided are a separator for a lithium secondary battery, a method for manufacturing the same and a lithium secondary battery including the same according to the following embodiments.

According to a first embodiment, provided is the separator for the lithium secondary battery including a porous polymer substrate; and an inorganic coating layer present on at least one surface of the porous polymer substrate, the inorganic coating layer including core-shell composite particle precursors, wherein the core-shell composite particle precursors include a core portion and a shell portion covering at least a part of a surface of the core portion, wherein the core portion includes inorganic particles, and wherein the shell portion includes an acrylic monomer or oligomer.

According to a second embodiment, in the first embodiment, the acrylic monomer or oligomer may include a thermally polymerizable acrylic monomer or oligomer.

According to a third embodiment, in the second embodiment, the thermally polymerizable acrylic monomer or oligomer may undergo polymerization in a temperature condition of 45°C to 85°C to form a thermally polymerized acrylic polymer.

According to a fourth embodiment, in any one of the second and third embodiments, the thermally polymerizable acrylic monomer or oligomer may be at least one monomer selected from butylacrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropylacrylate, pentylmethacrylate, 2-hydroxymethylacrylate, ethylmethacrylate, methylmethacrylate, acrylic acid and acrylonitrile, or an oligomer comprising at least one repeating unit derived therefrom.

According to a fifth embodiment, in any one of the first to fourth embodiments, a thickness of the shell portion may be 10 nm to 40 nm.

According to a sixth embodiment, in any one of the first to fifth embodiments, the inorganic coating layer may have a structure in which interstitial volume is formed between the core-shell composite particle precursors.

According to a seventh embodiment, in any one of the first to sixth embodiments, the core-shell composite particle precursors may include 10 to 90 wt% of the inorganic particles and 10 to 90 wt% of the acrylic monomer or oligomer, based on a total of 100 wt% of the core-shell composite particle precursors.

According to an eighth embodiment, in any one of the first to seventh embodiments, the core-shell composite particle precursors may be included in an amount of 95 wt% or more based on 100 wt% of the inorganic coating layer.

According to a ninth embodiment, in any one of the first to eighth embodiments, the inorganic coating layer may include core-shell composite particles formed by polymerization of the core-shell composite particle precursors.

According to a tenth embodiment, provided is the method for manufacturing the separator for the lithium secondary battery, the method including (S10) preparing an inorganic coating layer slurry composition including core-shell composite particle precursors and a first dispersion medium; (S20) applying the inorganic coating layer slurry composition to at least one surface of a porous polymer substrate; and (S30) drying the inorganic coating layer slurry composition.

According to an eleventh embodiment, in the tenth embodiment, the method for manufacturing the separator for the lithium secondary battery may further include, before the (S10), adding an acrylic monomer or oligomer and inorganic particles to a second aqueous dispersion medium and mixing to manufacture the core-shell composite particle precursors.

According to a twelfth embodiment, in the eleventh embodiment, manufacturing the core-shell composite particle precursors may include (S01) adding the acrylic monomer or oligomer and the inorganic particles to a 2a aqueous dispersion medium; (S02) stirring and mixing the acrylic monomer or oligomer and the inorganic particles for 12 to 36 hours to coat the acrylic monomer or oligomer on a surface of the inorganic particles; and (S03) adding the mixture in the (S02) to a 2b aqueous dispersion medium and separating the inorganic particles coated with the acrylic monomer or oligomer.

According to a thirteenth embodiment, in any one of the tenth to twelfth embodiments, the method for manufacturing the separator for the lithium secondary battery may further include, after the (S20), heating the inorganic coating layer slurry composition at a temperature of 45°C to 85°C to convert the core-shell composite particle precursors into core-shell composite particles.

According to a fourteenth embodiment, in any one of the tenth to thirteenth embodiments, (S30) drying the inorganic coating layer slurry composition may be performed at a temperature of 45°C to 85°C for 1 to 120 seconds.

According to a fifteenth embodiment, provided is the lithium secondary battery including a positive electrode; a negative electrode; an electrolyte solution; and a separator positioned between the positive electrode and the negative electrode, wherein the separator includes a porous polymer substrate; and an inorganic coating layer present on at least one surface of the porous polymer substrate, the inorganic coating layer including core-shell composite particles, wherein the core-shell composite particles include a core portion and a shell portion covering at least a part of a surface of the core portion, wherein the core portion includes inorganic particles, wherein the shell portion includes an acrylic polymer, and wherein the acrylic polymer is formed by polymerization of an acrylic monomer or oligomer.

According to a sixteenth embodiment, in the fifteenth embodiment, a dry adhesion strength of the separator in a dry state with respect to the electrodes may be 45 gf/15mm or more.

According to a seventeenth embodiment, in any one of the fifteenth and sixteenth embodiments, an air permeability of the separator may be 67 sec/100cc or less.

According to an eighteenth embodiment, in any one of the fifteenth to seventeenth embodiments, a difference between an air permeability of the separator and an air permeability of the porous polymer substrate may be 10 sec/100cc or less.

According to a nineteenth embodiment, in any one of the fifteenth to eighteenth embodiments, a resistance of the separator may be 0.5 ohm or less.

According to a twentieth embodiment, in any one of the fifteenth to nineteenth embodiments, the acrylic polymer may be formed by the polymerization of the acrylic monomer or oligomer in a process of manufacturing the lithium secondary battery.

### Advantageous Effects

The separator for the lithium secondary battery according to an embodiment of the present disclosure may have high adhesion strength (dry adhesion strength) with respect to electrodes and good air permeability, wetting and resistance characteristics.

The method for manufacturing the separator for the lithium secondary battery according to an embodiment of the present disclosure may provide methods for manufacturing separators having high adhesion strength (dry adhesion strength) with respect to electrodes and good air permeability, wetting and resistance characteristics.

The effects that can be objected through the present disclosure are not limited thereto, and these and other technical effects will be clearly understood by those skilled in the art from the following description.

### BRIEF DESCRIPTION OF THE DRAWINGS

The accompanying drawings illustrate an embodiment of the present disclosure and together with the above description, serves to provide a better understanding of the technical aspects of the present disclosure, and thus the present disclosure should not be construed as being limited to any of the drawings.
FIG. 1 shows schematically the structure of a separator according to an embodiment of the present disclosure.
FIG. 2 shows schematically a core-shell composite particle/core-shell composite particle precursor according to an embodiment of the present disclosure.

### BEST MODE

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe embodiments of the present disclosure but not intended to be limiting. The singular forms include the plural forms unless the context clearly indicates otherwise.

### Definition

The terms "comprise", "include" and "have" when used in this specification, specify the presence of the stated elements, but do not preclude the presence or addition of one or more other elements unless the context clearly indicates otherwise.

Glass transition temperature (Tg) may, for example, indicate a value measured by a dynamic mechanical analyzer (DMA) or a differential scanning calorimeter (DSC) (TA Instrument). For example, the glass transition temperature may indicate a value measured by DMA in accordance with ASTM D4065.

In this specification, D₅₀ refers to a particle size at 50% point of cumulative particle size distribution. Furthermore, D₁₀ refers to a particle size at 10% point of cumulative particle size distribution, and D₉₀ refers to a particle size at 90% point of cumulative particle size distribution.

In this specification, the particle size may be measured using a laser diffraction method. Specifically, the particle size distribution is calculated by dispersing a powder to be measured in a dispersion medium, feeding it into a commercially available laser diffraction particle size measuring instrument (for example, Microtrac S3500) and measuring a difference in diffraction pattern as a function of particle size when particles pass through a laser beam. The D₁₀, D₅₀ and D₉₀ may be measured by calculating particle diameters at 10% point, 50% point and 90% point of cumulative particle size distribution in the measuring instrument, respectively.

In this specification, "acrylic" refers to a branched or unbranched acrylic acid or methacrylic acid, or derivatives thereof. Additionally, "(meth)acrylic acid" or "(meth)acrylate" includes all of acrylic acid and methacrylic acid, and acrylate and methacrylate.

In this specification, weight average molecular weight (Mw) may be measured by gel permeation chromatography (GPC, PL GPC220, Agilent Technologies) in the following conditions.
- Column: PL Olexis (Polymer Laboratories)
- Dispersion medium: Trichlorobenzene (TCB)
- Flow rate: 1.0 ml/min
- Sample concentration: 1.0 mg/ml
- Injection volume: 200 µℓ
- Column temperature: 160°C
- Detector: Agilent High Temperature RI detector
- Standard: Polystyrene (fitting to a third degree polynomial)

### Separator for lithium secondary battery

The present disclosure provides a separator for a lithium secondary battery.

According to an aspect of the present disclosure, the separator for the lithium secondary battery of the present disclosure includes a porous polymer substrate; and an inorganic coating layer present on at least one surface of the porous polymer substrate, the inorganic coating layer including core-shell composite particle precursors, wherein the core-shell composite particle precursors include a core portion and a shell portion covering at least a part of a surface of the core portion, wherein the core portion includes inorganic particles, and wherein the shell portion includes an acrylic monomer or oligomer.

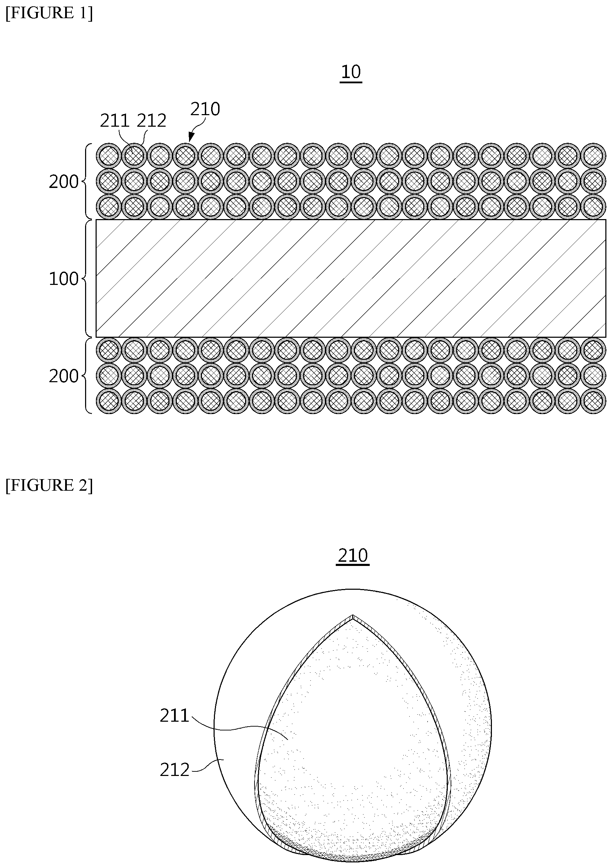

Specifically, as can be seen from FIG. 1, the separator 10 for the lithium secondary battery of the present disclosure includes the porous polymer substrate 100; and the inorganic coating layer 200 present on at least one surface of the porous polymer substrate 100, the inorganic coating layer 200 including the core-shell composite particle precursors 210, wherein the core-shell composite particle precursors 210 include the core portion 211 and the shell portion 212 covering at least a part of the surface of the core portion, wherein the core portion 211 includes the inorganic particles, and wherein the shell portion 212 includes the acrylic monomer or oligomer.

Meanwhile, as described below, the core-shell composite particle precursors 210 may undergo polymerization to form core-shell composite particles 210. Accordingly, the inorganic coating layer 200 may include the core-shell composite particles 210.

In an embodiment of the present disclosure, the acrylic monomer or oligomer may refer to the acrylic monomer or the acrylic oligomer.

In an embodiment of the present disclosure, the acrylic oligomer is a low-molecular weight polymer formed by polymerization of two or more acrylic monomers, and may be a compound containing a reactive functional group at the terminal of the molecule. The acrylic oligomer may be, for example, one in which repeating units are formed by polymerization of 2 to 10 monomer units.

### Porous polymer substrate

In an embodiment of the present disclosure, the porous polymer substrate refers to a substrate having a plurality of pores inside to act as a porous ion-conducting barrier that allows ions to pass while preventing an electrical contact between a negative electrode and a positive electrode. The pores are connected to each other, allowing gases or liquids to pass from one side of the substrate to the other.

The material of the porous polymer substrate may include any organic or inorganic material having electrical insulation properties. In particular, from the perspective of imparting a shutdown function to the porous polymer substrate, the material of the porous polymer substrate may preferably include thermoplastic resin. Here, the shutdown function refers to functionality of the thermoplastic resin that melts and closes the pores of the porous substrate to stop ion migration in order to prevent thermal runaway of the battery when the temperature of the battery increases. The thermoplastic resin may include thermoplastic resins having the melting point of less than 200°C, and preferably, especially polyolefin.

In addition, the porous polymer substrate may further include at least one polymer resin of polyethylene terephthalate, polybutylene terephthalate, polyacetal, polyamide, polycarbonate, polyimide, polyetheretherketone, polyethersulfone, polyphenylene oxide, polyphenylene sulfide or polyethylene naphthalene. The porous polymer substrate may include a nonwoven fabric, a porous polymer film or a laminate of two or more thereof, but is not particularly limited thereto.

In the present disclosure, the thickness of the porous polymer substrate is preferably 3 µm to 12 µm, or 5 µm to 12 µm. When the thickness of the porous polymer substrate is below the aforementioned range, the function as the conducting barrier is insufficient, and in contrast, when the thickness of the porous polymer substrate is much higher than the aforementioned range (or when the porous polymer substrate is too thick), the resistance of the separator may increase too much.

In an embodiment of the present disclosure, the weight average molecular weight of the polyolefin may be 100,000 to 5,000,000. When the weight average molecular weight is smaller than 100,000, it may be difficult to ensure sufficient mechanical properties. In addition, when the weight average molecular weight is larger than 5,000,000, the shutdown characteristics may not work properly or forming may become difficult. In addition, the puncture strength of the porous polymer substrate may be 300 gf or more to improve the production yield. The puncture strength of the porous substrate refers to the maximum puncture load (gf) measured by a puncture test in the conditions of a needle tip curvature radius of 0.5 mm and a puncture speed of 4 mm/sec using a Kato tech KES-G5 handy compression tester.

In a certain embodiment of the present disclosure, the porous polymer substrate may include any planar porous polymer substrate used in electrochemical devices, and for example, may include an insulating thin film having high ion permeability and mechanical strength, a pore diameter of generally 10 nm to 200 nm and a thickness of generally 5 µm to 12 µm.

In an embodiment of the present disclosure, air permeability of the porous polymer substrate may be in a range of 40 sec/100cc to 70 sec/100cc, or 45 sec/100cc to 65 sec/100cc according to the type.

### Inorganic coating layer

In an embodiment of the present disclosure, the inorganic coating layer is present on at least one surface of the porous polymer substrate and includes the core-shell composite particle precursors, wherein the core-shell composite particle precursors include the core portion and the shell portion covering at least a part of the surface of the core portion, wherein the core portion includes the inorganic particles, and wherein the shell portion includes the acrylic monomer or oligomer.

In another embodiment of the present disclosure, the inorganic coating layer is present on at least one surface of the porous polymer substrate and includes the core-shell composite particles, wherein the core-shell composite particles include the core portion and the shell portion covering at least a part of the surface of the core portion, wherein the core portion may include the inorganic particles, and wherein the shell portion may include an acrylic polymer. That is, the shell portion may include the acrylic polymer formed by polymerization of the acrylic monomer or oligomer.

In an embodiment of the present disclosure, in the inorganic coating layer, the core-shell composite particle precursors may be converted into the core-shell composite particles through polymerization. The "core-shell composite particle/core-shell composite particle precursor" as used herein refers to the common feature shared between the core-shell composite particle and its precursor.

In an embodiment of the present disclosure, the inorganic coating layer may have a structure in which interstitial volume is formed between the core-shell composite particles/core-shell composite particle precursors. Lithium ions may move through the interstitial volume. That is, the interstitial volume may refer to pores (voids) created between binder polymers or monomers or oligomers made from the binder polymers in the shell portion when they bond together. By the interstitial volume, the separator may have high electrode-separator adhesion strength in a dry state (dry adhesion strength) and good air permeability and resistance characteristics.

In an embodiment of the present disclosure, the core-shell composite particles/core-shell composite particle precursors may have a single-phase particle structure such as core-shell or a multi-phase particle structure such as core-first shell-second shell.

In an embodiment of the present disclosure, the core-shell composite particles/core-shell composite particle precursors may have a spherical, elliptical, oval or platy shape or an irregular particle shape. The shape of the core-shell composite particles/core-shell composite particle precursors may be, for example, observed through a scanning electron microscope (SEM).

In an embodiment of the present disclosure, the core-shell composite particles/core-shell composite particle precursors may be included in an amount of 95 wt% or more, 96 wt% or more, 97 wt% or more, 98 wt% or more, or 99 wt% or more based on 100 wt% of the inorganic coating layer. That is, the inorganic coating layer may substantially include the core-shell composite particles/core-shell composite particle precursors.

In an embodiment of the present disclosure, the inorganic coating layer may include substantially no other type of binder polymer. That is, the inorganic coating layer may include the other type of binder polymer in an amount of less than 5 wt%, less than 4 wt%, less than 3 wt%, less than 2 wt%, or less than 1 wt% based on 100 wt% of the inorganic coating layer.

In this instance, the other type of binder polymer may refer to a binder polymer that is different from the binder polymer included in the shell portion of the core-shell composite particles, and is not limited to a particular type. For example, the other type of binder polymer may include a fluorinated binder polymer or an acrylic binder polymer. The fluorinated binder polymer and the acrylic binder polymer may be the same as those described below.

In an embodiment of the present disclosure, the inorganic coating layer may have good heat resistance of the separator due to the core portion of the core-shell composite particles, and ensure bonds of the core-shell composite particles and electrode-separator adhesion strength due to the shell portion. Thus, the inorganic particles may include substantially no binder polymer. Accordingly, the separator may have high electrode-separator adhesion strength and good air permeability and resistance characteristics.

### Core portion

In an embodiment of the present disclosure, the core portion includes the inorganic particles. The inorganic particles are not limited to a particular one and may include any electrochemically stable one. That is, the inorganic particles that may be used in the present disclosure is not limited to a particular type and may include any type of inorganic particles that do not drive oxidation and/or reduction reaction in the operating voltage range (for example, 0 to 5 V vs Li/Li⁺) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate (Li₃PO₄), lithium titanium phosphate (LiₓTi_{y}(PO₄)₃, 0 < x < 2 , 0 < y < 3 ), lithium aluminum titanium phosphate (LiₓAl_{y}Ti_{z}(PO₄)₃, 0 < x < 2, 0 < y <1, 0 < z < 3), (LiAlTiP)ₓO_{y}-based glass (0 < x < 4, 0 < y < 13) such as 14Li₂O-9Al₂O₃-38TiO₂-39P₂O₅, lithium lanthanum titanate (LiₓLa_{y}TiO₃, 0 < x < 2 , 0 < y < 3), lithium germanium thiophosphate (LiₓGe_{y}P_{z}S_{w}, 0 < x < 4, 0< y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, 0 < x < 3, 0 <y < 2, 0 < z < 4) such as Li₃PO₄-Li₂S-SiS₂, P₂S₅-based glass (LiₓP_{y}S_{z}, 0 < x < 3, 0< y < 3, 0 < z < 7) such as LiI-Li₂S-P₂S₅, or a mixture thereof.

In addition, the average particle size of the inorganic particles is not limited to a particular range, but is preferably 0.1 µm to 2.0 µm, or 0.2 µm to 1.8 µm in order to form the coating layer with even thickness and optimal porosity. When the average particle size of the inorganic particles is below the lower limit, heat resistance of the separator may be reduced, and when the average particle size of the inorganic particles is above the upper limit, the inorganic coating layer may be formed with a larger thickness.

In an embodiment of the present disclosure, the inorganic particles may be included in an amount ranging from 10 wt% to 90 wt% based on 100 wt% of the core-shell composite particles/core-shell composite particle precursors. That is, the core portion may be included in an amount ranging from 10 wt% to 90 wt% based on 100 wt% of the core-shell composite particles.

### Shell portion

In an embodiment of the present disclosure, the core-shell composite particle precursors include the core portion and the shell portion covering at least a part of the surface of the core portion, and the shell portion includes the acrylic monomer or oligomer. The acrylic monomer or oligomer may be bonded, attached or applied to at least a part of the surface of the core portion.

In an embodiment of the present disclosure, the thickness of the shell portion may be 10 nm to 40 nm, 20 nm to 38 nm, 21 nm to 37 nm, 25 nm to 35 nm, or 28 nm to 33 nm. When the thickness of the shell portion falls within the aforementioned range, adhesion strength and air permeability of the core-shell composite particles may be improved. Furthermore, the inorganic particles avoid exposure, leading to improved resistance characteristics.

The thickness of the shell portion may be calculated by measuring the size of the inorganic particles, measuring the size of the core-shell composite particle precursors, and subtracting the size of the inorganic particles from the size of the core-shell composite particle precursors. Alternatively, the thickness of the shell portion may be determined by scanning electron microscopic (SEM) measurement and image analysis.

In an embodiment of the present disclosure, the acrylic monomer or oligomer may include a thermally polymerizable acrylic monomer or oligomer.

In an embodiment of the present disclosure, when the acrylic monomer or oligomer includes the thermally polymerizable acrylic monomer or oligomer, the thermally polymerizable acrylic monomer or oligomer may be formed by thermal polymerization of the thermally polymerizable acrylic monomer at or above a predetermined temperature. The thermally polymerizable acrylic monomer or oligomer may be a polymer of thermally polymerizable acrylic monomers that are polymerized in the temperature condition of 45°C to 85°C, or 50°C to 70°C.

The thermally polymerizable acrylic monomer may differ in temperature at which it is polymerized by heat depending on the structure of the thermally polymerizable acrylic monomer, so the starting temperature of polymerization of the acrylic monomer may be controlled by changing the type of the acrylic monomer and the type of an initiator. When the starting temperature of polymerization of the acrylic monomer falls within the aforementioned temperature range, the acrylic monomer is crosslinked at higher temperatures than room temperature, and in the common natural drying step, the acrylic monomer is not polymerized, so the start of polymerization may be controlled. In addition, because high temperature is not required for the polymerization of the acrylic monomer, the properties of the porous polymer substrate may not degrade.

In an embodiment of the present disclosure, the thermally polymerizable acrylic monomer may be a branched or unbranched compound having 2 to 16, 2 to 14, or 2 to 12 carbon atoms. When the carbon number of the thermally polymerizable acrylic monomer falls within the aforementioned range, the adhesive properties of the monomer may be improved.

In an embodiment of the present disclosure, the thermally polymerizable acrylic monomer or oligomer may be at least one monomer selected from butylacrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropylacrylate, pentylmethacrylate, 2-hydroxymethylacrylate, ethylmethacrylate, methylmethacrylate, acrylic acid and acrylonitrile or an oligomer comprising at least one repeating unit derived therefrom.

In an embodiment of the present disclosure, when the acrylic monomer or oligomer includes the thermally polymerizable acrylic monomer or oligomer, the shell portion may further include a thermal polymerization initiator.

The thermal polymerization initiator are known in the field of acrylic monomer polymerization technology and may be used in the present disclosure. Typical thermal polymerization initiators that are available in the present disclosure include organic peroxide, organic hydroperoxide and azo initiators that generate free radicals. Available organic peroxide may include compounds such as benzoyl peroxide, di-t-amyl peroxide, t-butyl peroxybenzoate and di-cumyl peroxide, but is not limited thereto. Available organic hydroperoxide may include compounds such as t-amyl hydroperoxide and t-butyl hydroperoxide, but is not limited thereto. Available azo initiator may include VAZO compounds from DuPont, for example, VAZO^{™} 52 (2,2'-azobis(2,4-dimethylpentanenitrile)), VAZO^{™} 64 (2,2'-azobis(2-methylpropanenitrile)), VAZO^{™} 67 (2,2'-azobis(2-methylbutanenitrile)) and VAZO^{™} 88 (2,2'-azobis(cyclohexanecarbonitrile)), but is not limited thereto.

In an embodiment of the present disclosure, the thermal polymerization initiator may be included in the shell portion in an amount of 0.01 to 20 parts by weight based on 100 parts by weight of the thermally polymerizable acrylic monomer or oligomer, but the amount of the thermal polymerization initiator may change depending on process efficiency or properties of the polymer.

In an embodiment of the present disclosure, the inorganic coating layer may include substantially no particulate binder polymer, or if any, may include a particulate binder polymer in an amount of less than 5 wt%, less than 4 wt%, less than 3 wt%, less than 2 wt%, or less than 1 wt%. The particulate binder may be included in a small amount for bonds between the core-shell composite particle precursors, or may be substantially absent. When the aforementioned numerical range is met, resistance characteristics and air permeability of the separator may be improved.

The particulate binder polymer may have a property of maintaining its original particle shape without a change in shape when it is dispersed in dispersion media. Specifically, the particulate binder polymer may exist in a particulate state within aqueous dispersion media. To be specific, the particulate binder polymer may be dispersed in a particulate phase within aqueous dispersion media due to low solubility in aqueous solvents. An aspect ratio of the particulate binder polymer in aqueous dispersion media may be in a range of 1.0 to 1.5, 1.0 to 1.3, or 1.0 to 1.2. In this instance, the aspect ratio is defined as a ratio of the length of the major axis to the minor axis of the particulate binder, and as the aspect ratio is closer to 1, the shape may be closer to a sphere. The aspect ratio may be, for example, calculated using a particle shape analyzer (QICPIC-LIXELL, Sympatec GmbH).

In an embodiment of the present disclosure, the particulate binder polymer may include an acrylic particulate binder polymer, a fluorine-based particulate binder polymer, or a combination thereof.

In an embodiment of the present disclosure, the acrylic particulate binder polymer may include, for example, an acrylic homopolymer, i.e., a polymer composed of a single type of acrylic monomer, or a copolymer of an acrylic monomer and another monomer. For example, the acrylic particulate binder polymer may include poly(methylmethacrylate), poly(ethylhexylacrylate), poly(butylacrylate), poly(acrylonitrile), a copolymer of ethylhexylacrylate and methylmethacrylate, a copolymer of butylacrylate and methylmethacrylate, an ethylacrylate-acrylic acid-N,N-dimethylacrylamide copolymer, an ethylacrylate-acrylic acid-2-(dimethylamino)ethylacrylate copolymer, an ethylacrylate-acrylic acid-N,N-diethylacrylamide copolymer, an ethyl acrylate-acrylic acid-2-(diethylamino)ethyl acrylate copolymer, or a mixture of two or more thereof.

In an embodiment of the present disclosure, the fluorine-based particulate binder polymer may include, for example, a polyvinylidene fluoride (PVDF) homopolymer, and a copolymer of a repeating unit derived from vinylidene fluoride and another repeating unit. For example, the fluorine-based particulate binder polymer may include a copolymer of a repeating unit derived from vinylidene fluoride and at least one selected from a repeating unit derived from trifluoroethylene (TrFE), a repeating unit derived from tetrafluoroethylene (TFE), a repeating unit derived from hexafluoropropylene (HFP), a repeating unit derived from trichloroethylene (TrCE), a repeating unit derived from trichlorofluoroethylene (TCFE), a repeating unit derived from chlorotrifluoroethylene (CTFE), a repeating unit derived from polymethylmethacrylate (PMMA) and a repeating unit derived from polyvinylacetate (PVAc), or a mixture of two or more thereof.

In an embodiment of the present disclosure, the glass transition temperature (Tg) of the particulate binder polymer may be 30°C to 90°C, or 50°C to 80°C. When the particulate binder polymer has the aforementioned glass transition temperature, the binder may lose the shape of particles at the time of manufacturing the separator and form a film under predetermined temperature and pressure conditions.

In an embodiment of the present disclosure, the D₅₀ of the particulate binder polymer may be 150 nm to 1 µm, or 200 nm to 800 nm. When the size of the particulate binder polymer falls within the aforementioned range, adhesion strength and porosity of the separator may be improved.

In an embodiment of the present disclosure, the inorganic coating layer may include the core-shell composite particles formed by polymerization of the core-shell composite particle precursors.

In an embodiment of the present disclosure, the core-shell composite particles may include the core portion and the shell portion covering at least a part of the surface of the core portion, and the shell portion may include the acrylic polymer. The acrylic polymer may be bonded, attached or applied to at least a part of the surface of the core portion.

In an embodiment of the present disclosure, the thickness of the shell portion including the acrylic polymer may be substantially the same as the thickness of the shell portion including the acrylic monomer or oligomer. The thickness of the shell portion including the acrylic polymer may be, for example, 10 nm to 40 nm, 20 nm to 38 nm, 21 nm to 37 nm, 25 nm to 35 nm, or 28 nm to 33 nm. When the thickness of the shell portion falls within the aforementioned range, the adhesion strength and air permeability of the core-shell composite particles may be improved. In addition, the inorganic particles avoid exposure, leading to improved resistance characteristics.

In an embodiment of the present disclosure, the acrylic polymer may be formed by polymerization of the above-described acrylic monomers or oligomers.

### Method for manufacturing separator for lithium secondary battery

The present disclosure provides a method for manufacturing a separator for a lithium secondary battery.

According to an aspect of the present disclosure, the method for manufacturing the separator for the lithium secondary battery of the present disclosure includes (S10) preparing an inorganic coating layer slurry composition including the core-shell composite particle precursors and a first dispersion medium; (S20) applying the inorganic coating layer slurry composition to at least one surface of the porous polymer substrate; and (S30) drying the inorganic coating layer slurry composition.

Hereinafter, each step of the method for manufacturing the separator for the lithium secondary battery will be described in detail.

First, the inorganic coating layer slurry composition including the core-shell composite particle precursors and the first dispersion medium is prepared (S10).

The core-shell composite particle precursors refer to particles that may be converted into the core-shell composite particles. The core-shell composite particle precursors may include a slurry composition including the inorganic particles and the acrylic monomer covering at least a part of the surface of the inorganic particles.

In an embodiment of the present disclosure, before the step (S10), the method may further include the step of adding the acrylic monomer and the inorganic particles to a second aqueous dispersion medium and mixing together to prepare the core-shell composite particle precursors.

In an embodiment of the present disclosure, the step of preparing the core-shell composite particle precursors includes the steps of (S01) adding the acrylic monomer or oligomer and the inorganic particles to a 2a aqueous dispersion medium; (S02) stirring and mixing the acrylic monomer or oligomer and the inorganic particles for 12 to 36 hours to coat the acrylic monomer or oligomer on the surface of the inorganic particles; and (S03) adding the mixture in the step (S02) to a 2b aqueous dispersion medium and separating the inorganic particles coated with the acrylic monomer or oligomer.

Specifically, the acrylic monomer or oligomer and the inorganic particles may be dispersed in the 2a aqueous dispersion medium, and stirred and mixed for a sufficient time of 12 to 36 hours to coat the acrylic monomer on the surface of the inorganic particles. When the mixing time is below the lower limit, the acrylic monomer or oligomer may not be sufficiently coated on the surface of the inorganic particles. When the mixing time is above the upper limit, the manufacturing process efficiency may be reduced.

Subsequently, solids and particles in the mixture are added to the 2b aqueous dispersion medium and mixed together, and the inorganic particles coated with the acrylic monomer or oligomer are separated from the mixture and dispersed again in the first dispersion medium to manufacture the core-shell composite particle precursors. When the above-described steps are further included, the acrylic monomer is not located in the interstitial volume between the core-shell composite particles/core-shell composite particle precursors, thereby improving air permeability and resistance characteristics.

In an embodiment of the present disclosure, the acrylic monomer or oligomer may include a thermally polymerizable acrylic monomer or oligomer. Meanwhile, the inorganic particles, the acrylic monomer and the thermally polymerizable acrylic monomer or oligomer may be the same as those described above.

In an embodiment of the present disclosure, the dispersion medium, i.e., the first dispersion medium may include an aqueous dispersion medium or an organic dispersion medium.

In an embodiment of the present disclosure, the aqueous dispersion medium, the 2a aqueous dispersion medium and the 2b aqueous dispersion medium may include water. Furthermore, when there are limits to the drying speed and temperature, methanol, ethanol or isopropyl alcohol having lower boiling point than water may be used as a co-dispersion medium.

In an embodiment of the present disclosure, the organic dispersion medium may include, for example, cyclic aliphatic hydrocarbons such as cyclopentane or cyclohexane; aromatic hydrocarbons such as toluene, xylene or ethylbenzene; ketones such as acetone, ethyl methyl ketone, diisopropyl ketone, cyclohexanone, methylcyclohexane or ethylcyclohexane; chlorinated aliphatic hydrocarbons such as methylene chloride, chloroform or carbon tetrachloride; esters such as ethyl acetate, butyl acetate, γ-butyrolactone or ε-caprolactone; acylonitrile such as acetonitrile or propionitrile; ethers such as tetrahydrofuran or ethylene glycol diethyl ether; alcohols such as methanol, ethanol, isopropanol, ethylene glycol or ethylene glycol monomethyl ether; or amides such as N-methylpyrrolidone or N,N-dimethylformamide, and the dispersion medium may include acetone in view of advantages in the drying process.

In an embodiment of the present disclosure, a weight ratio of the acrylic monomer or oligomer to the inorganic particles may be 1:99 to 99:1, 10:90 to 90:10, or 20:80 to 80:20.

Subsequently, the inorganic coating layer slurry composition is applied to at least one surface of the porous polymer substrate (S20).

The method of applying the inorganic coating layer slurry composition to at least one surface of the porous polymer substrate may include, for example, dip coating, die coating, roll coating, comma coating, microgravure coating, doctor blade coating, reverse roll coating, Mayer Bar coating, direct metering coating, or a mixture thereof.

In an embodiment of the present disclosure, after the step (S20), the method may further include the step of heating the inorganic coating layer slurry composition at the temperature of 45°C to 85°C, or 50°C to 70°C to convert the core-shell composite particle precursors into the core-shell composite particles. Specifically, when the inorganic coating layer slurry composition is heated at the aforementioned range of temperatures, the thermally polymerizable acrylic monomer of the core-shell composite particle precursors may undergo polymerization to form a thermally polymerized acrylic polymer.

In an embodiment of the present disclosure, the step of converting the core-shell composite particle precursors into the core-shell composite particles may be, for example, performed simultaneously with the process of placing the separator between the positive electrode and the negative electrode to manufacture an electrode assembly, followed by lamination. In this case, the contact area between the separator and the electrode may be increased, and the electrode-separator bond strength may be increased.

The thermally polymerized acrylic polymer may differ in temperature at which it is polymerized by heat depending on the structure of the thermally polymerizable acrylic monomer or oligomer, so the starting temperature of polymerization of the acrylic monomer may be controlled by changing the type of the acrylic monomer. Because high temperature is not required for the polymerization of the acrylic monomer, the properties of the porous polymer substrate may not degrade.

Subsequently, the inorganic coating layer slurry composition is dried (S30). In an embodiment of the present disclosure, the drying time may be 1 minute to 10 hours, and the drying temperature may be in a range of 30°C to 100°C. The drying method is not limited to a particular one and may include any method for removing the dispersion medium from the separator, and for example, an appropriate method may include any one of convection drying and hot air drying, or a combination thereof.

In an embodiment of the present disclosure, the step (S30) of drying the inorganic coating layer slurry composition may be performed at the temperature of 45°C to 85°C for 1 to 120 seconds. In this case, the conversion of the core-shell composite particle precursors into the core-shell composite particles and the drying of the inorganic coating layer slurry composition may be concurrent.

In an embodiment of the present disclosure, the method for manufacturing the separator for the lithium secondary battery may manufacture the separator for the lithium secondary battery including the inorganic coating layer including the core-shell composite particle precursors and the separator for the lithium secondary battery including the inorganic coating layer including the core-shell composite particles by controlling the polymerization step.

### Lithium secondary battery

The present disclosure provides a lithium secondary battery.

According to an aspect of the present disclosure, the lithium secondary battery of the present disclosure includes the positive electrode; the negative electrode; the electrolyte solution; and the separator positioned between the positive electrode and the negative electrode, wherein the separator includes the porous polymer substrate; and the inorganic coating layer present on at least one surface of the porous polymer substrate, the inorganic coating layer including the core-shell composite particles, wherein the core-shell composite particles include the core portion and the shell portion covering at least a part of the surface of the core portion, wherein the core portion includes the inorganic particles, wherein the shell portion includes the acrylic polymer, and wherein the acrylic polymer is formed by polymerization of the acrylic monomer or oligomer.

In an embodiment of the present disclosure, the positive electrode may be manufactured by coating a positive electrode composition on a positive current collector, the positive electrode composition including a positive electrode active material, a binder, a conductive material and a dispersion medium.

The positive electrode active material may include any positive electrode active material commonly used in positive electrodes of electrochemical devices. For example, the positive electrode active material may include lithium manganese oxide, lithium cobalt oxide, lithium nickel oxide, lithium iron oxide or lithium composite oxide thereof.

In this instance, the positive electrode active material may be included in an amount of 80 wt% to 99 wt%, and preferably 85 wt% to 98 wt% based on the total solid weight of the positive electrode composition. When the amount of the positive electrode active material falls within the aforementioned range, improved capacity characteristics may be provided.

The positive current collector is not limited to a particular type and may include any material having conductivity without causing a chemical change in the corresponding battery. For example, the positive current collector may include stainless steel, aluminum, nickel, titanium, calcined carbon, or aluminum or stainless steel treated with carbon, nickel, titanium or silver on the surface.

The binder serves to assist in holding the active material and the conductive material together and bonding to the current collector, and may be generally added in an amount of 1 wt% to 30 wt% based on the total solid weight of the positive electrode composition. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluororubber or a variety of copolymers.

The conductive material may be generally added in an amount of 1 wt% to 30 wt% based on the total solid weight of the positive electrode composition.

The conductive material is not limited to a particular type and may include any material having conductivity without causing a chemical change in the corresponding battery. The conductive material may include, for example, graphite; carbon-based materials such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specific examples of commercially available conductive materials include acetylene black from Chevron Chemical Company or Denka Singapore Private Limited, products from Gulf Oil Company, Ketjenblack, EC series (from Armak Company), Vulcan XC-72 (from Cabot Company) and Super P (from Timcal).

In addition, the positive electrode active material layer may optionally further include a dispersant, if necessary.

The dispersant is not limited to a particular type and may include any dispersant used for the positive electrode, and for example, an aqueous dispersant or an organic dispersant may be selectively used according to necessity. Preferably, the dispersant may include any one of a cellulose-based compound, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymer, acrylonitrile/styrene/acrylic ester (ASA) polymer, a mixture of acrylonitrile/styrene/acrylic ester (ASA) polymer and propylene carbonate, a styrene/acrylonitrile (SAN) copolymer, methyl methacrylate/acrylonitrile/butadiene/styrene (MABS) polymer, styrene butadiene rubber, nitrile butadiene rubber and fluororubber, or a mixture of two or more thereof. Hydrogenated nitrile butadiene rubber (H-NBR) may be used. When the positive electrode active material layer further includes the dispersant, dispersion of the components of the positive electrode active material layer, particularly the conductive material may be improved, but is not limited thereto.

In addition, the dispersion medium may include any dispersion medium commonly used in the corresponding technical field, and for example, may include any one of dimethylsulfoxide (DMSO), isopropyl alcohol, N-methylpyrrolidone (NMP), acetone or water, or a mixture of two or more thereof. The dispersion medium is used in a sufficient amount for dissolving or dispersing the positive electrode active material, the conductive material and the binder, taking the coating thickness of the slurry or the production yield into account, and modifying the viscosity to achieve high thickness uniformity in the subsequent coating process to manufacture the positive electrode.

The negative electrode according to the present disclosure may be manufactured by coating a negative electrode composition on a negative current collector, the negative electrode composition including a negative electrode active material, a binder, a conductive material and a dispersion medium. In addition, the negative electrode composition may optionally further include a dispersant, if necessary.

The negative electrode active material may include compounds capable of reversible intercalation and deintercalation of lithium. Preferably, the negative electrode may further include a negative electrode active material exhibiting high-capacity characteristics, for example, a silicon-based negative electrode active material; a carbon-based negative electrode active material; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements in the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; titanium oxide; or lithium titanium oxide. The silicon-based negative electrode active material may include at least one selected from the group consisting of Si, SiOₓ (0.1 < x < 5), Si-metal alloy, silicon oxide particle (SiOₓ, 0.1 < x < 5) doped or chemically bonded with metal such as Mg, and Si-SiOₓ alloy (0.1 < x < 5). The carbon-based negative electrode active material may include at least one selected from the group consisting of natural graphite, artificial graphite, amorphous hard carbon, low-crystalline soft carbon, carbon black, acetylene black, Ketjen black, Super P, graphene and fibrous carbon.

The negative current collector is not limited to a particular type and may include any material having high conductivity without causing a chemical change in the battery. For example, the negative current collector may include copper, stainless steel, aluminum, nickel, titanium, calcined carbon, copper or stainless steel treated with carbon, nickel, titanium or silver on the surface, or aluminum-cadmium alloy. In addition, the negative current collector may be generally 3 µm to 500 µm in thickness, and in the same way as the positive current collector, may have a microtextured surface to increase the bond strength of the negative electrode active material. The negative current collector may come in different forms, for example, a film, a sheet, a foil, a net, a porous body, a foam or a non-woven fabric.

The conductive material, the binder, the dispersion medium or the dispersant included in the negative electrode composition are not limited to a particular type and may include those commonly used in the electrode composition, and for example, the conductive material, the binder, the dispersion medium or the dispersant described above in the positive electrode composition may be used.

In addition, the lithium secondary battery may further include the electrolyte solution. The electrolyte solution may include an organic liquid electrolyte solution, an inorganic liquid electrolyte solution, a solid polymer electrolyte solution, a gel polymer electrolyte solution, a solid inorganic electrolyte solution or a molten inorganic electrolyte solution that may be used to manufacture the lithium secondary battery, but is not limited thereto.

Specifically, the electrolyte solution may include an organic dispersion medium and a lithium salt.

The organic dispersion medium is not limited to a particular type and may include any organic dispersion medium that acts as a medium for the movement of ions involved in the electrochemical reactions of the battery. Specifically, the organic dispersion medium may include ester-based dispersion media such as methyl acetate, ethyl acetate, γ-butyrolactone or ε-caprolactone; ether-based dispersion media such as dibutyl ether or tetrahydrofuran; ketone-based dispersion media such as cyclohexanone; aromatic hydrocarbon-based dispersion media such as benzene or fluorobenzene; carbonate-based dispersion media such as dimethylcarbonate (DMC), diethylcarbonate (DEC), methylethylcarbonate (MEC), ethylmethylcarbonate (EMC), ethylene carbonate (EC) or propylene carbonate (PC); alcohol-based dispersion media such as ethyl alcohol or isopropyl alcohol; nitriles such as R-CN (R is a C2 to C20 straight-chain, branched-chain or cyclic hydrocarbon, and may comprise an exocyclic double bond or ether bond); amides such as dimethylformamide; dioxolanes such as 1,3-dioxolane; or sulfolanes. Among them, the carbonate-based dispersion medium is preferable, and a mixture of the cyclic carbonate (for example, ethylene carbonate or propylene carbonate) having high ionic conductivity and high dielectric constant that contributes to the improved charge/discharge performance of the battery and the low-viscosity linear carbonate-based compound (for example, ethyl methyl carbonate, dimethyl carbonate or diethyl carbonate) is more preferable. In this case, when the cyclic carbonate and the linear carbonate are mixed at a volume ratio of about 1:1 to about 1:9, the electrolyte solution may have improved performance.

The lithium salt is not limited to a particular type and may include any compound capable of providing lithium ions used in the lithium secondary battery. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI or LiB(C₂O₄)₂. The concentration of the lithium salt may be in a range of 0.1 M to 2.0 M. When the concentration of the lithium salt falls within the aforementioned range, the electrolyte solution may have optimal conductivity and viscosity, resulting in improved performance of the electrolyte solution and effective movement of lithium ions.

In addition to the above-described components of the electrolyte solution, the electrolyte solution may further include, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in order to improve the life characteristics of the battery, prevent the capacity fading of the battery and improve the discharge capacity of the battery. In this instance, the additive may be included in an amount of 0.1 to 5 parts by weight based on the total weight 100 parts by weight of the electrolyte solution.

In an embodiment of the present disclosure, the adhesion strength (dry adhesion strength) of the separator in a dry state with respect to electrodes may be 45 gf/15 mm or more, or 48 gf/15 mm or more. Preferably, the dry adhesion strength may be 100 gf/15 mm or less, or 90 gf/15 mm or less.

In an embodiment of the present disclosure, air permeability of the separator may be 67 sec/100cc or less, or 65 sec/100cc or less. Preferably, the air permeability of the separator may be 45 sec/100cc or more, or 50 sec/100cc or more.

In an embodiment of the present disclosure, a difference between the air permeability of the separator and air permeability of the porous polymer substrate may be 10 sec/100cc or less, 7 sec/100cc or less, or 5 sec/100cc or less. When the air permeability difference falls within the aforementioned range, it may represent that the air permeability of the separator is not substantially reduced by the formation of the inorganic coating layer, indicating that pore blockage by the inorganic coating layer may be minimized. Further, this structure may contribute to improving electrolyte wetting and preventing reductions in initial ion conductivity and charge/discharge characteristics.

In an embodiment of the present disclosure, resistance characteristics may be 0.5 ohm or less, or 0.48 ohm or less. When the resistance characteristics fall within the aforementioned range, it may be possible to improve initial ionic conductivity, reduce or prevent a voltage drop during high-rate charging/discharging, and improve output characteristics of the battery. Furthermore, it may be possible to suppress an increase in internal resistance during long-term cycling, thereby preventing a decline in life characteristics.

In an embodiment of the present disclosure, the acrylic polymer may be formed by polymerization of the acrylic monomer or oligomer in the process of manufacturing the battery. The acrylic monomer or oligomer in the inorganic coating layer may be converted into the acrylic polymer through the polymerization process such as lamination, thermal curing or UV irradiation after forming the coating layer. By the above-described manufacturing method, the acrylic polymer in the coating layer may be evenly bonded to the surface of the inorganic particles and the surface of the substrate, thereby ensuring good adhesion strength and mechanical stability and maintaining good air permeability and electrolyte wetting without excessive blockage of the pore structure.

Hereinafter, the present disclosure will be described in more detail through examples, but the following examples are intended to describe the present disclosure by way of illustration, and the scope of the present disclosure is not limited thereto.

### Example 1

Aluminum oxide (Al₂O₃, D₅₀: 450 nm, Sumitomo) as inorganic particles and butyl acrylate as an acrylic monomer were added to water (2a aqueous dispersion medium) at room temperature. Subsequently, stirring was performed using a homogenizer at the rotational speed of 500 rpm for 24 hours to coat the butyl acrylate on the surface of the aluminum oxide. Subsequently, the stirred mixture was dispersed in water (2b aqueous dispersion medium) again, and solids, i.e., core-shell composite particle precursors were removed from the dispersion and added to water (first dispersion medium) to prepare an inorganic coating layer slurry composition including the core-shell composite particle precursors. In this instance, the solid content of the inorganic coating layer slurry composition was 35 wt%, and a weight ratio of the inorganic particles : the acrylic monomer was 80:20.

The inorganic coating layer slurry composition was applied to two surface of a 9 µm-thick polypropylene substrate (air permeability: 59 sec/100cc) using a doctor blade, and dried at the temperature of 60°C for 60 seconds to form an inorganic coating layer having a thickness of 1.5 µm on each of the two surfaces, thereby manufacturing a separator having a thickness of about 12 µm.

In this instance, it was confirmed that the D₅₀ of the core-shell composite particles was 510 nm, and the thickness of the shell was 30 nm. The thickness of the shell was calculated from the D₅₀ of the inorganic particles and the D₅₀ of the core-shell composite particles. Meanwhile, a weight ratio of the core portion to the shell portion was 80:20.

### Reference Example

Reference Example is prepared in substantially the same manner as in Example 1, except that, the inorganic coating layer slurry composition was applied to two surfaces of the 9 µm thick polypropylene substrate (air permeability: 59 sec/100cc) using the doctor blade, and dried at the temperature of 30°C for 60 seconds to form the inorganic coating layer having the thickness of 1.5 µm on each of the two surfaces, thereby manufacturing the separator having the thickness of approximately 12.2 µm.

That is, Reference Example is different from Example 1 in that the core-shell composite particle precursors were not polymerized.

In this instance, it was confirmed that the D₅₀ of the core-shell composite particles was 505 nm, and the thickness of the shell portion was 27.5 nm.

### Comparative Example 1

Aluminum oxide (Al₂O₃, D₅₀: 450 nm, Sumitomo) as inorganic particles and a meth(acrylate) monomer as an acrylic monomer were added to water at room temperature. Subsequently, mixing was performed using a bead mill dispersing machine for 1 hour to prepare an inorganic coating layer slurry composition. In this instance, the solid content of the inorganic coating layer slurry composition was 35 wt%, and a weight ratio of the inorganic particles : the acrylic monomer was 80:20.

The inorganic coating layer slurry composition was applied to two surface of a 9 µm-thick polypropylene substrate (air permeability: 59 sec/100cc) using a doctor blade, and dried at the temperature of 60°C for 60 seconds to form an inorganic coating layer having a thickness of 1.5 µm on each of the two surfaces, thereby manufacturing a separator having a thickness of about 12.1 µm.

That is, compared to Example 1, in Comparative Example 1, the aluminum oxide and the acrylic monomer were not sufficiently mixed, and the acrylic monomer was not coated or was incompletely coated on the surface of the aluminum oxide, and unlike Example 1, the step of separating the core-shell composite particle precursors was not performed, so the acrylic monomer alone existed in the inorganic coating layer slurry composition.

In this instance, it was confirmed that the D₅₀ particle size of the solids in the inorganic coating layer was 520 nm.

### Comparative Example 2

Aluminum oxide (Al₂O₃, D₅₀: 450 nm, Sumitomo) as inorganic particles and an acrylic particulate binder (polyacrylate, Tg: 40°C, D₅₀: 400 nm) as a particulate binder polymer were added to water at room temperature, and evenly stirred to prepare a slurry composition. In this instance, the solid content of the slurry composition was 35 wt%, and a weight ratio of the inorganic particles : the particulate binder polymer was 80:20.

The slurry composition was applied to two surface of a 9 µm-thick polypropylene substrate (air permeability: 59 sec/100cc) using a doctor blade, and dried at the temperature of 40°C for 120 seconds to form an inorganic coating layer having a thickness of 1.5 µm on each of the two surfaces, thereby manufacturing a separator having a thickness of about 12.1 µm.

### Experimental Example

For each of Examples and Comparative Examples, air permeability, dry adhesion strength and resistance performance were evaluated as follows and summarized in TABLE 1 below.

**TABLE 1**

| | Air permeability (sec/100cc) | Air permeability of separator-Air permeability of porous polymer substrate (sec/100cc) | Dry adhesion strength (gf/15mm) | Resistance (ohm) |
|---|---|---|---|---|
| Example 1 | 63 | 4 | 50 | 0.46 |
| Reference Example | 60 | 1 | 42 | 0.44 |
| Comparative Example 1 | 96 | 37 | 64 | 0.81 |
| Comparative Example 2 | 70 | 11 | 55 | 0.52 |

It was confirmed that compared to Comparative Example, Example 1 had high air permeability and low resistance because of having a structure in which interstitial volume was formed between the core-shell composite particles. Specifically, the separator of Example 1 having the inorganic coating layer on the porous polymer substrate (air permeability: 59 sec/100cc) has only increased in air permeability by 4 sec/100cc. In addition, it was confirmed that Example 1 including no polymer in the inorganic coating layer and the acrylic polymer in the shell portion had good dry adhesion strength. On the other hand, it was confirmed that Reference Example had high air permeability because of having a structure in which interstitial volume was formed between the core-shell composite particle precursors. Specifically, it was confirmed that the separator of Reference Example having the porous coating layer including the core-shell composite particle precursors on the porous polymer substrate having air permeability of 59 sec/100cc has only increased in air permeability by 1 sec/100cc, showing substantially the same air permeability. However, because the acrylic monomer was not polymerized, it was confirmed that dry adhesion strength was low.

Furthermore, as a result of comparing Example 1 with Reference Example, it was confirmed that Example 1, in which the core-shell composite particle precursors were converted into the core-shell composite particles by thermal polymerization, showed an increase in air permeability by 3 sec/100cc and at least about 19% improvement in adhesion strength with respect to electrodes.

In contrast, Comparative Example 1 including the inorganic particles, the incomplete core-shell composite particles and the acrylic polymer made from the acrylic monomer between the particles has lower air permeability than Example 1. Furthermore, because of including the acrylic polymer, pore blockage occurred, significantly reducing air permeability compared to Example 1. Moreover, it was confirmed that pore blockage results in high resistance.

It was confirmed that Comparative Example 2 had poor air permeability and increased resistance due to electrolyte absorption by the particulate binder.

### Evaluation method

### Thickness measurement

The thickness of the separator of each of Examples and Comparative Examples was measured using a thickness measuring instrument (Mitutoyo, VL-50S-B) and summarized in TABLE 1.

### Air permeability evaluation

The air permeability time of the separator of each of Examples and Comparative Examples was measured using a measuring instrument (Asahi Seiko), and the results are shown in TABLE 1. The air permeability time as described herein refers to the time (in seconds) it takes for 100 cc of air to pass through an area of 1 in² under the pressure of 12.2 in H₂O.

### Dry adhesion strength

The electrode plate manufactured in each of Examples and Comparative Examples was cut into a width of 15 mm and fixed to a slide glass, and the current collector was peeled off at a speed of 300 mm/min to measure the 180-degree peel strength, and the results are shown in TABLE 1.

### Resistance characteristics evaluation

LiCoO₂ as a positive electrode active material, carbon black as a conductive material and polyvinylidene fluoride (PVdF) as a binder were added to N-methylpyrrolidone (NMP) as a dispersion medium at a weight ratio of 85:5:15 to prepare a positive electrode active material slurry. The positive electrode active material slurry was coated on a sheet-shaped aluminum current collector and dried to prepare a positive electrode with final positive electrode loading of 3.3 mAh/cm².

Artificial graphite as a negative electrode active material, carbon black as a conductive agent and polyvinylidene fluoride (PVdF) as a binder were mixed at a weight ratio of 75:5:25, and N-methylpyrrolidone (NMP) as a dispersion medium was added to the mixture to prepare a negative electrode slurry. The negative electrode slurry was coated on a copper current collector at a loading amount of 3.8 mAh/cm² and dried to prepare a negative electrode having a negative electrode active material layer.

The separator of each of Examples and Comparative Examples was sufficiently soaked in an electrolyte containing ethylene carbonate (EC)/ethyl methyl carbonate (EMC) at a volume ratio of 3:7, 1M LiPF₆, and 2 wt% of VC, and a coin cell was manufactured using the as-prepared separator. The coin cell was left untouched at room temperature for 1 day, and separator resistance (ER) and ionic conductivity were measured using a potentiostat through an impedance measurement method.

## Claims

1. A separator for a lithium secondary battery, comprising:
a porous polymer substrate; and
an inorganic coating layer present on at least one surface of the porous polymer substrate, the inorganic coating layer including core-shell composite particle precursors,
wherein the core-shell composite particle precursors include a core portion and a shell portion covering at least a part of a surface of the core portion,
wherein the core portion includes inorganic particles, and
wherein the shell portion includes an acrylic monomer or oligomer.

2. The separator for the lithium secondary battery according to claim 1,
wherein the acrylic monomer or oligomer includes a thermally polymerizable acrylic monomer or oligomer.

3. The separator for the lithium secondary battery according to claim 2,
wherein the thermally polymerizable acrylic monomer or oligomer undergoes polymerization in a temperature condition of 45°C to 85°C to form a thermally polymerized acrylic polymer.

4. The separator for the lithium secondary battery according to claim 2,
wherein the thermally polymerizable acrylic monomer or oligomer is at least one monomer selected from butylacrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropylacrylate, pentylmethacrylate, 2-hydroxymethylacrylate, ethylmethacrylate, methylmethacrylate, acrylic acid and acrylonitrile, or an oligomer comprising at least one repeating unit derived therefrom.

5. The separator for the lithium secondary battery according to claim 1,
wherein a thickness of the shell portion is 10 nm to 40 nm.

6. The separator for the lithium secondary battery according to claim 1,
wherein the inorganic coating layer has a structure in which interstitial volume is formed between the core-shell composite particle precursors.

7. The separator for the lithium secondary battery according to claim 1,
wherein the core-shell composite particle precursors include 10 to 90 wt% of the inorganic particles and 10 to 90 wt% of the acrylic monomer or oligomer, based on a total of 100 wt% of the core-shell composite particle precursors.

8. The separator for the lithium secondary battery according to claim 1,
wherein the core-shell composite particle precursors are included in an amount of 95 wt% or more based on 100 wt% of the inorganic coating layer.

9. The separator for the lithium secondary battery according to claim 1,
wherein the inorganic coating layer includes core-shell composite particles formed by polymerization of the core-shell composite particle precursors.

10. A method for manufacturing a separator for a lithium secondary battery, the method comprising:
(S10) preparing an inorganic coating layer slurry composition including core-shell composite particle precursors and a first dispersion medium;
(S20) applying the inorganic coating layer slurry composition to at least one surface of a porous polymer substrate; and
(S30) drying the inorganic coating layer slurry composition.

11. The method for manufacturing the separator for the lithium secondary battery according to claim 10, before the (S10),
further comprising:
adding an acrylic monomer or oligomer and inorganic particles to a second aqueous dispersion medium and mixing to manufacture the core-shell composite particle precursors.

12. The method for manufacturing the separator for the lithium secondary battery according to claim 11,
wherein manufacturing the core-shell composite particle precursors comprises:
(S01) adding the acrylic monomer or oligomer and the inorganic particles to a 2a aqueous dispersion medium;
(S02) stirring and mixing the acrylic monomer or oligomer and the inorganic particles for 12 to 36 hours to coat the acrylic monomer or oligomer on a surface of the inorganic particles; and
(S03) adding a mixture in the (S02) to a 2b aqueous dispersion medium and separating the inorganic particles coated with the acrylic monomer or oligomer.

13. The method for manufacturing the separator for the lithium secondary battery according to claim 10, after the (S20),
further comprising:
heating the inorganic coating layer slurry composition at a temperature of 45°C to 85°C to convert the core-shell composite particle precursors into core-shell composite particles.

14. The method for manufacturing the separator for the lithium secondary battery according to claim 10,
wherein (S30) drying the inorganic coating layer slurry composition is performed at a temperature of 45°C to 85°C for 1 to 120 seconds.

15. A lithium secondary battery comprising:
a positive electrode; a negative electrode; an electrolyte solution; and a separator positioned between the positive electrode and the negative electrode,
wherein the separator includes:
a porous polymer substrate; and
an inorganic coating layer present on at least one surface of the porous polymer substrate, the inorganic coating layer including core-shell composite particles,
wherein the core-shell composite particles include a core portion and a shell portion covering at least a part of a surface of the core portion,
wherein the core portion includes inorganic particles,
wherein the shell portion includes an acrylic polymer, and
wherein the acrylic polymer is formed by polymerization of an acrylic monomer or oligomer.

16. The lithium secondary battery according to claim 15,
wherein a dry adhesion strength of the separator in a dry state with respect to the electrodes is 45 gf/15mm or more.

17. The lithium secondary battery according to claim 15,
wherein an air permeability of the separator is 67 sec/100cc or less.

18. The lithium secondary battery according to claim 15,
wherein a difference between an air permeability of the separator and an air permeability of the porous polymer substrate is 10 sec/100cc or less.

19. The lithium secondary battery according to claim 15,
wherein a resistance of the separator is 0.5 ohm or less.

20. The lithium secondary battery according to claim 15,
wherein the acrylic polymer is formed by the polymerization of the acrylic monomer or oligomer in a process of manufacturing the lithium secondary battery.
